Europäisches Patentamt

European Patent Office

Office européen des brevets

(11) Numéro de publication : **0 434 491 B1**

(19)

(12) **FASCICULE DE BREVET EUROPEEN**

(45) Date de publication du fascicule du brevet :
**09.12.92 Bulletin 92/50**

(51) Int. Cl.⁵ : **C10G 35/095, B01J 29/28**

(21) Numéro de dépôt : **90403475.8**

(22) Date de dépôt : **06.12.90**

(54) **Utilisation d'un catalyseur du type alumino-silicate contenant du gallium en aromatisation des coupes légères contenant 5 à 7 atomes de carbone par molécule.**

(30) Priorité : **20.12.89 FR 8917028**
**16.02.90 FR 9001997**

(43) Date de publication de la demande :
**26.06.91 Bulletin 91/26**

(45) Mention de la délivrance du brevet :
**09.12.92 Bulletin 92/50**

(84) Etats contractants désignés :
**BE DE GB IT NL**

(56) Documents cités :
**EP-A- 0 119 027**
**EP-A- 0 172 068**
**EP-A- 0 215 579**
**EP-A- 0 351 312**

(73) Titulaire : **INSTITUT FRANCAIS DU PETROLE**
**4, Avenue de Bois Préau**
**F-92502 Rueil-Malmaison (FR)**

(72) Inventeur : **Juguin, Bernard**
**46, avenue du Stade**
**F-92500 Rueil Malmaison (FR)**
Inventeur : **Bournonville, Jean-Paul**
**43, rue des Groues Vauréal**
**F-95000 Cergy Pontoise (FR)**
Inventeur : **Guth, Jean-Louis**
**59, rue Bellevue Brunstatt**
**F-68200 Mulhouse (FR)**
Inventeur : **Raatz, Francis**
**25, rue de la Carrière**
**F-57500 Saint-Avold (FR)**
Inventeur : **Kessler, Henri**
**17, rue de la Forêt**
**F-68270 Wittenheim (FR)**

## Description

La présente invention concerne l'utilisation d'un catalyseur de type aluminosilicate comprenant une zéolithe de structure MFI, synthétisée en milieu fluorure, contenant du silicium, de l'aluminium, et du gallium, dans les réactions d'aromatisation des coupes légères contenant 5 à 7 atomes de carbone par molécule en présence ou non d'oléfines.

La synthèse dans des milieux fluorures de ce type de zéolithe de structure MFI a déjà été décrite dans le brevet européen EP-A-172068 de CFR.

Quant au catalyseur utilisé dans la présente invention il est décrit dans la demande de brevet français de la demanderesse n° 88/09632 du 12 juillet 1988.

Les zéolithes obtenues par la procédure de synthèse décrite dans EP-A-172068 sont des zéolithes de structure MFI dont les diagrammes de diffraction des rayons X ont des caractéristiques correspondant aux spécifications du tableau 1. Ces zéolithes de structure MFI ont comme formule chimique approchée après calcination exprimée sous forme oxyde :

$$M_{2/n}O, Al_2O_3, xSiO_2$$

où x peut varier de 12 à 1000 et où M représente le ou les cations de compensation de valence n. Le point important est que ces solides contiennent, après l'étape de synthèse et également après l'étape d'élimination des composés organiques, de l'élément fluor. La teneur en fluor dans la zéolithe déterminée par analyse élémentaire est comprise pour les solides calcinés, entre 0,01 et 1,5 % en poids, avantageusement entre 0,1 et 1,0 % et de préférence entre 0,2 et 0,8 %.

La présence de fluor dans les zéolithes de structure MFI confère à ces solides des propriétés, notamment des propriétés acides et d'échange ionique, tout à fait différentes de celles des zéolithes de structure MFI synthétisées de manière classique,

2

TABLEAU I : Caractéristiques du spectre de diffraction X des zéolithes de structure MFI utilisées dans l'invention.

| $d_{hkl}$ (Å) $(10^{-10}$ m) | I/Io | $d_{hkl}$ (Å) $(10^{-10}$ m) | I/Io | $d_{hkl}$ (Å) $(10^{-10}$ m) | I/Io |
|---|---|---|---|---|---|
| 11,08-11,26 | FF | 4,06-4,10 | ff | 2,772-2,793 | ff |
| 9,94-10,20 | mf | 3,99-4,05 | f | 2,725-2,749 | ff |
| 9,68- 9,90 | f | 3,83-3,89 | F | 2,677-2,697 | ff |
| 8,98- 9,08 | ff | 3,80-3,86 | m | 2,648-2,670 | ff |
| 8,00- 8,09 | ff | 3,74-3,78 | mf | 2,605-2,619 | ff |
| 7,40- 7,52 | ff | 3,70-3,74 | mf | 2,581-2,597 | ff |
| 7,03- 7,22 | ff | 3,63-3,67 | mf | 2,545-2,557 | ff |
| 6,64- 6,84 | f | 3,58-3,62 | ff | 2,508-2,526 | ff |
| 6,30- 6,42 | f | 3,46-3,50 | ff | 2,479-2,50 | ff |
| 5,95- 6,07 | f | 3,42-3,46 | f | 2,407-2,419 | ff |
| 5,67- 5,79 | f | 3,38-3,42 | ff | 2,393-2,401 | ff |
| 5,54- 5,61 | f | 3,33-3,37 | f | 2,326-2,340 | ff |
| 5,32- 5,42 | ff | 3,29-3,33 | ff | 2,314-2,332 | ff |
| 5,10- 5,23 | ff | 3,23-3,27 | ff | 2,195-2,209 | ff |
| 5,01- 5,08 | f | 3,16-3,20 | ff | 2,104-2,120 | ff |
| 4,95- 5,03 | f | 3,12-3,16 | ff | 2,077-2,095 | ff |
| 4,84- 4,93 | ff | 3,08-3,12 | ff | 2,070-2,084 | ff |
| 4,59- 4,64 | ff | 3,03-3,07 | f | 2,004-2,022 | f |
| 4,44- 4,50 | ff | 2,976-3,020 | f | 1,985-2,005 | f |
| 4,34- 4,40 | f | 2,943-2,962 | f | 1,944-1,964 | ff |
| 4,23- 4,29 | f | 2,855-2,881 | ff | 1,907-1,922 | ff |

FF = très fort ; F = fort ; mF = moyen à fort ; m = moyen

mF = moyen à faible ; f = faible ; ff = très faible

c'est-à-dire en milieu alcalin (US 3.702.886 par exemple). Après synthèse et élimination des composés organiques par calcination, les solides sont caractérisés par un spectre de vibration infrarouge qui présente des bandes attribuées classiquement aux groupes Si-OH (zone 3730-3750 cm⁻¹) et aux groupes Al-OH structuraux (région 3580-3640 cm⁻¹) très peu intenses par rapport à celles d'une zéolithe de structure MFI classique, de même rapport Si/Al égal à 22.

L'absence ou la quasi absence de groupes Al-OH structuraux dans les zéolithes selon l'invention est confirmée par les capacités d'échange ionique de ces solides. En effet les capacités d'échange ionique pour des cations tels que par exemple $Na^+$, $K^+$, $Ga^{3+}$, $Pt(NH_3)_4^{2+}$ etc sont très inférieures aux capacités d'échange théoriques totales que l'on peut calculer à partir de la teneur en aluminium de la charpente cristalline.

Ces solides qui ne présentent pas ou peu d'hydroxyles structuraux et dont la capacité d'échange est très réduite, possèdent de manière surprenante des propriétés acides remarquables. Ainsi la thermodésorption d'ammoniac qui permet de rendre compte de l'acidité globale d'un solide (nombre et force des différents types de sites acides) montre que les solides comprenant du fluor incorporé dans la structure sont très acides. Les spectres de thermodésorption d'ammoniac sont comparables à ceux que l'on obtiendrait avec des zéolithes de structure MFI classiques ; cependant l'acidité des solides selon l'invention est d'une nature différente. Ces résultats sont confirmés par microcalorimétrie d'adsorption d'ammoniac.

L'introduction de fluor dans les zéolithes est une méthode qui a déjà été proposée pour augmenter l'acidité de ces solides (J. MIALE and C. CHANG US 4.540.841). Cependant dans l'art antérieur, le fluor est introduit dans la zéolithe par des modifications réalisées après la synthèse. En d'autres termes, on réalise une synthèse classique, c'est-à-dire en milieu alcalin puis on traite le solide par une technique permettant en principe de fixer du fluor. Ces techniques précédemment proposées, souffrent généralement de gros défauts. Elles sont par exemple, comme c'est le cas quand on traite le solide par du fluor gazeux, succeptibles de conduire à une dégradation de l'ordre cristallin (US 4.297.335). Dans la préparation du catalyseur utilisé dans la présente invention, le fluor est introduit dans la zéolithe au niveau de la synthèse et permet au contraire d'aboutir à des solides très bien cristallisés.

Par des traitements particuliers, il est possible d'éliminer partiellement ou totalement le fluor contenu dans les solides entrant dans la composition des catalyseurs utilisés sans altérer leur cristallinité. Une technique que l'on peut utiliser pour défluorer les solides consiste à procéder à un traitement dans une solution d'ammoniaque à des températures comprises par exemple entre l'ambiante et 200°C (traitement en autoclave sous pression autogène). L'élimination partielle ou complète du fluor conduit :

- d'une part comme indiqué ci-dessus à l'apparition dans le spectre IR de deux bandes situées vers 3740 et 3608 $cm^{-1}$ correspondant, d'après les attributions admises dans la littérature scientifique, aux groupes silanols terminaux et aux groupes Al-OH structuraux respectivement et
- d'autre part à la restructuration de la capacité d'échange ionique telle qu'on peut la calculer à partir de la teneur en aluminium de charpente des solides.

Ainsi en fonction du traitement de défluoration, on peut obtenir pour un même rapport Si/Al de charpente, des solides contenant une quantité de groupes Al-OH et Si-OH ainsi qu'une capacité d'échange ionique variables. Un solide partiellemenet défluoré contient donc outre des sites acides classiques du type Al-OH pouvant jouer le rôle de sites d'échanges, des sites acides particuliers dont la nature exacte n'est pas encore totalement élucidée mais qui résultent indéniablement de l'introduction dans les solides de fluor lors de la synthèse.

C'est cette particularité des solides que l'on a mise à profit pour préparer des catalyseurs contenant du gallium et succeptibles par exemple d'aromatiser un hydrocarbure comme le n-pentane et plus généralement des coupes légères contenant 5 à 7 atomes de carbone en présence ou non d'oléfines.

La présente invention concerne donc l'utilisation en aromatisation des coupes légères contenant 5 à 7 atomes de carbone, un catalyseur du type aluminosilicate de composition suivante exprimée en poids :

a) 0,01 à 10 % en poids de gallium, de préférence 0,3 à 7 %

b) 0,1 à 99,49 % d'une matrice choisie dans le groupe formé par l'alumine, la silice, la magnésie, une argile et toute combinaison d'au moins deux des composés précités et

c) 0,50 à 99,99 % d'une zéolithe synthétisée en milieu fluorure de formule chimique approchée généralement la suivante :

$$M_{2/n}O,\ Al_2O_3,\ xSiO_2,$$

où

M représente un proton et/ou un cation métallique

n est la valence du cation

x est un nombre compris entre 12 et 1000 (rapport molaire $SiO_2/Al_2O_3$), la zéolithe ayant une teneur en fluor comprise en 0,01 et 1,5 % en poids, de préférence 0,1 à 1 % en poids, le fluor étant incorporé lors de la synthèse, ladite zéolithe étant aussi caractérisée par un diagramme de diffraction X présente dans le tableau I.

Après synthèse en milieu fluorure, le solide peut être soumis si besoin est, à un traitement de défluoration permettant d'ajuster sa capacité d'échange ionique, à la teneur en gallium que l'on veut introduire. Plus la teneur en fluor sera faible, plus la teneur en gallium pourra être élevée.

Le traitement de défluoration est plus ou moins sévère suivant le niveau de défluoration désiré.

Il consiste en un ou plusieurs traitements successifs du solide, à reflux dans une solution d'ammoniaque de normalité comprise entre environ 0,05 et 5N et de préférence entre 0,1 et 3N, pendant une durée comprise entre environ 0,5 et 5 heures et de préférence entre 1 et 4 heures avec un rapport V/P défini comme le volume de solution par rapport au poids de solide sec compris entre environ 5 et 50 $cm^3g^{-1}$ et de préférence entre 10 et 30 $cm^3g^{-1}$. Le solide, après chaque lavage est ensuite abondamment lavé à l'eau distillée et séché à l'étuve. Après ces traitements et suivant leur sévérité, la teneur en fluor du solide est comprise entre 0,9 et 0,01 % en poids. Si on élimine, par des traitements répétés, sensiblement la totalité du fluor, on aboutit encore à des solides qui se distinguent en particulier par leur spectre IR dans la région 3800-3500 $cm^{-1}$ des zéolithes de structure MFI classiques de même rapport Si/Al de charpente : les solides contenus dans le catalyseur selon l'invention possèdent une proportion plus importante de groupes Si-OH.

Le solide partiellement ou totalement défluoré peut être soumis tel quel au dépôt du gallium ou mis en forme par toutes les techniques connues de l'homme du métier. Il peut en particulier être mélangé à une matrice généralement amorphe, par exemple à une poudre humide de gel d'alumine. Le mélange est ensuite mis en forme, par exemple par extrusion au travers d'une filière. La teneur en zéolithe du support ainsi obtenu est généralement comprise entre environ 0,5 et 99,99 % et avantageusement comprise entre environ 40 et 90 % poids.

La teneur en matrice du catalyseur est comprise entre 0,1 et 99,49 % et avantageusement entre environ 10 et 60 %. La mise en forme peut être réalisée avec d'autres matrices que l'alumine, telles que, par exemple la magnésie, la silice alumine, les argiles naturelles (kaolin, bentonite), et par des techniques telles que l'extrusion, le pastillage, la dragéification ou la coagulation en gouttes (oil drop). Le gallium est ensuite déposé sur le support par tout procédé connu de l'homme du métier et permettant le dépôt du métal dans la zéolithe. On peut utiliser la technique d'échange cationique avec compétition où l'agent compétiteur est de préférence le nitrate d'ammonium, ou encore la technique de dépôt de gallium sur le catalyseur par imprégnation. Les solutions d'échange ou d'imprégnation du gallium peuvent être préparées à partir de composés du gallium tels que par exemple l'oxyde de gallium, le nitrate de gallium, le sulfate de gallium, des halogénures de gallium ou l'hydroxyde de gallium. Ces techniques d'échange ionique ou d'imprégnation peuvent également être utilisées pour déposer le métal directement sur la poudre de zéolithe, avant son mélange éventuel avec une matrice. La teneur en gallium déposée sur le catalyseur à l'issue de ou des étapes d'échange ionique et/ou d'imprégnation dépend de la teneur en fluor du solide ; elle se situe entre 0,01 et 10 % en poids par rapport à l'ensemble du catalyseur et de préférence entre 0,3 % et 7,0 % en poids.

Le catalyseur ainsi défini est mis en oeuvre pour la réaction d'aromatisation des coupes légères, par exemple du n-pentane et/ou d'un mélange $C_5$ à $C_7$ en présence ou non d'oléfines. Cette réaction revêt un intérêt particulier car elle permet de valoriser des résidus d'opérations de raffinage $C_5$ à $C_7$ en des produits à plus haute valeur ajoutée (benzène, toluène, xylènes) tout en contribuant à la production de quantités importantes d'hydrogène indispensable pour les procédés d'hydrotraitement par exemple.

La charge contenant du n-pentane et/ou de l'isopentane et/ou des hexanes et/ou des heptanes, en présence ou non d'oléfines, est mise en contact avec le catalyseur de la présente invention à une température comprise entre 400 et 700°C, et plus particulièrement entre 420 et 520°C.

Les exemples qui suivent précisent l'invention sans toutefois en limiter la portée.

Tous les catalyseurs utilisés dans les exemples suivants renfermant 20 % d'une matrice et 80 % de zéolithe.

Selon une technique particulière, l'aromatisation peut être effectuée dans au moins deux réacteurs à lits fixes, au moins un réacteur pouvant être mis hors circuit pour régénérer le catalyseur qu'il contient ("swing reactor" en langue anglaise). Il convient que le catalyseur soit utilisé sous forme d'extrudés.

En utilisant cette dernière technique, on a constaté des sélectivités en aromatiques et en BTX très stables dans des périodes de marche de l'ordre de 500 heures et plus selon les conditions opératoires utilisées.

EXEMPLE 1 : Préparation d'une zéolithe A entrant dans la composition du catalyseur utilisé selon l'invention.

On prépare une zéolithe de structure MFI de rapport atomique Si/Al proche de 25 à partir d'une source d'aluminium et de silicium, à savoir du Tixolex 28 partiellement désaluminé.

Le Tixolex 28 est un aluminosilicate de sodium commercialisé par Rhône Poulenc et caractérisé par les rapports atomiques Si/Al = 7,3 et Na/Al = 1,1. On prépare la forme partiellement désaluminée de la manière suivante : 60 g de Tixolex 28 sont agités pendant 3 heures à température ambiante avec 600 ml de $HNO_3$ M/2. Le produit obtenu est filtré et lavé à l'eau jusqu'à pH 7. Après séchage à 80°C, il est conservé dans une humidité relative de 80 %. La composition pondérale est la suivante 76,10 % $SiO_2$ ; 5,46 % $Al_2O_3$ ; 0,24 % $Na_2O$ ; 17,63 % $H_2O$ totale.

On prépare un mélange réactionnel A dont les compositions molaire et pondérale sont indiquées dans le tableau 2. Pour cela, on ajoute sous agitation le mélange de $NH_4F$, $N(C_3H_7)_4{}^+$ $Br^-$ et eau au Tixolex partiellement

EP 0 434 491 B1

désaluminé. La cristallisation du mélange réactionnel A est réalisé dans un autoclave, dont les revêtements internes sont constitués de polytétrafluoroéthane, à 190°C pendant 3,5 jours.

TABLEAU 2

|  | Tixolex partiellement désaluminé | | $NH_4F$ | $N(C_3H_7)_4Br$ | $H_2O$ |
|---|---|---|---|---|---|
|  | $SiO_2$ | $Al_2O_3$ | | | |
| moles A | 0,2 | 0,0084 | 0,04 | 0,1 | 1,6 |
| g | 15,8 | | 1,48 | 26,6 | 28,8 |

Après cristallinisation le solide est filtré et lavé avec une solution de diéthylamine à 10 % puis avec une solution d'eau chaude. Le solide est ensuite séché à 80°C. L'analyse cristallographique montre que le produit A, est bien une zéolithe de structure MFI dont le diagramme de diffraction des rayons X correspond aux spécifications du tableau 1. L'analyse chimique du produit A après calcination sous air à 550°C est la suivante :
Si/Al atomique 28
F (% points) 0,8.

EXEMPLE 2 : Catalyseur Al utilisé conformément à l'invention.

On fait subir à la zéolithe A de l'exemple 1 un premier traitement d'une durée de 4 heures avec une solution d'ammoniaque de concentration 0,2 N à la température de 100°C, le produit est ensuite filtré et lavé à l'eau distillée, puis séché à l'étuve à 150°C.

Après traitement, on obtient un solide dont la cristallinité et le rapport Si/Al ne sont pas altérés mais dont la teneur en fluor est de 0,05 % pds.

Le solide A de l'exemple 1 ainsi traité, est mis en forme par extrusion avec un liant ou matrice de type aluminique à raison de 80 % en poids de zéolithe et 20 % en poids de liant.

Le catalyseur Al est préparé de la manière suivante : une alumine pseudo boehmite fournie par la société CONDEA est peptisée par ajout d'acide nitrique puis malaxée.

Le catalyseur Al est obtenu par mélange de cette pseudo boehmite avec la zéolithe A ayant subi la procédure de défluoration partielle décrite ci-dessus.

Cette zéolithe est introduite à raison de 80 g de zéolithe pour 20 g de liant puis malaxée ; la pâte obtenue, après ajustement de sa consistance par ajout de petites quantités d'eau, est forcée au travers d'une filière de diamètre 1,4 mm, puis séchés sous flux d'air à 120°C et calcinée à 550°C pendant une heure.

Le gallium est déposé sur les extrudés par échange ionique. La solution d'échange est préparée à partir de nitrate de gallium $Ga(NO_3)_3$ 0.15N. Le pH de la solution de gallium est ajustée à 2,1 avec de l'ammoniaque.

La teneur en gallium atteinte après trois échanges était de 3,10 % en poids par rapport aux extrudés.

EXEMPLE 3

A titre de comparaison, on prépare un catalyseur B1 en utilisant une zéolithe MFI synthétisée de façon classique en milieu alcalin, à savoir le CBV5020 commercialisée par la Société CONTEKA. Le rapport atomique Si/Al de cette zéolithe est égal à 28, sa teneur en $Na_2O$ de 200 ppm et sa surface spécifique de 410 m²/g ; teneur en fluor 0,05 %.

Cette zéolithe est ensuite mise en forme par extrusion avec un liant aluminique à raison de 80 % en poids de zéolithe et 20 % en poids de liant, selon la technique opératoire décrite dans l'exemple 2. On introduit alors du gallium (3,10 % en poids) suivant la procédure décrite dans ce même exemple 2.

6

EXEMPLE 4

Les catalyseurs AI et BI ont été testés en aromatisation d'une coupe $C_5$ de composition pondérale suivante :

```
- isopentane    :   60 %
- n-pentane     :   40 %
                   ─────
                    100
```

Les conditions opératoires étaient les suivantes :
- température : 490°C
- pression : atmosphérique
- débit horaire de charge liquide égal à 2 fois le poids du catalyseur.
Les résultats obtenus sont présentés sur le tableau 3.

## TABLEAU 3

| CATALYSEUR | A1 | B1 |
|---|---|---|
| **COMPOSITION PONDERALE DU PRODUIT** | | |
| Hydrogène | 4,57 | 3,91 |
| Méthane | 7,15 | 8,27 |
| Ethane | 7,34 | 8,48 |
| Propane | 13,37 | 15,45 |
| Butanes | 0,86 | 0,99 |
| Isopentane | 0,98 | 0,93 |
| n-pentane | 0,47 | 0,45 |
| Hexanes | 0,11 | 0,13 |
| Ethylène | 1,31 | 1,51 |
| Propène | 1,78 | 2,06 |
| Butènes | 0,03 | 0,04 |
| Benzène | 11,15 | 10,19 |
| Toluène | 25,36 | 23,16 |
| Ethylbenzène | 0,48 | 0,45 |
| Xylènes | 15,44 | 14,10 |
| Aromatiques $C_9$ | 2,58 | 2,41 |
| Aromatiques $C_{10}^+$ | 7,02 | 7,47 |
| **TAUX DE CONVERSION** | | |
| Isopentane | 98,4 % | 98,5 % |
| n-pentane | 98,8 % | 98,9 % |
| **SELECTIVITE/PENTANES TRANSFORMES** | | |
| Hydrogène | 4,6 % | 4 % |
| Craquage (C1+C2+C3+C4+C6) | 29,3 % | 33,8 % |
| Oléfines ($C_2^=+C_3^=+C_4^=$) | 3,2 % | 3,7 % |
| aromatiques | 62,9 % | 58,5 % |
| BTX | 52,7 % | 48,1 % |

On peut constater la supériorité des catalyseurs utilisés selon l'invention, à base de zéolithe type MFI synthétisée en milieu fluoré. En effet, si l'activité des deux catalyseurs Al et Bl est pratiquement identique, la sélectivité en aromatiques et surtout en B.T.X du catalyseur Al est nettement meilleure.

EP 0 434 491 B1

## EXEMPLE 5

Le catalyseur AI de l'exemple 2 est utilisé pour la réaction d'aromatisation d'un raffinat en $C_6$ de composition pondérale suivante :

| | | |
|---|---|---|
| - isohexanes | : | 65 % |
| - n-hexane | : | 26 % |
| - méthylcyclopentane | : | 9 % |
| | | 100 |

Les conditions opératoires étaient les suivantes :
- température : 470°C
- pression : atmosphérique
- débit horaire de charge liquide égal à 2 fois le poids du catalyseur.
A la sortie du réacteur, le produit avait la composition pondérale suivante (% poids) :

| | | |
|---|---|---|
| - hydrogène | : | 5,37 |
| - méthane | : | 5,77 |
| - éthane | : | 7,70 |
| - propane | : | 13,61 |
| - butanes | : | 0,83 |
| - pentanes | : | 0,24 |
| - isohexanes | : | 0,18 |
| - n-hexane | : | 0,18 |
| - méthylcyclopentane | : | 0,04 |
| - heptanes | : | 0,03 |
| - éthylène | : | 1,01 |
| - propène | : | 1,37 |
| - benzène | : | 10,26 |
| - toluène | : | 26,69 |
| - éthylbenzène | : | 0,38 |
| - xylènes | : | 14,81 |
| - aromatiques $C_9$ | : | 2,67 |
| - aromatiques $C_{10}^+$ | : | 8,86 |
| | | 100 |

soit un taux de conversion de la coupe $C_6$ de 99,6 %.

Les sélectivités par rapport à la coupe $C_6$ transformée sont les suivantes :

9

```
- hydrogène                          :  5,4 %
- craquage (C₁+C₂+C₃+C₄+C₅+C₇): 28,3 %
- oléfines (C₂⁼+C₃⁼)                :  2,4 %
- aromatiques                       : 63,9 %
- B.T.X                             : 52 %
```

## EXEMPLE 6

Le catalyseur $A_1$ de l'exemple 2 est utilisé pour la réaction d'aromatisation d'un raffinat en $C_7$ de composition pondérale suivante :

```
- isoheptanes              : 74 %
- n-heptane                : 21 %
- diméthylcyclopentanes    :  3 %
- benzène                  :  2 %
                            ─────
                            100
```

Les conditions opératoires étaient les suivantes :
- température : 460°C
- pression : atmosphérique
- débit horaire de charge liquide égal à 2 fois le poids du catalyseur.
A la sortie du réacteur, le produit avait la composition pondérale suivante (% poids) :

```
- hydrogène                :  5,54
- méthane                  :  5,14
- éthane                   :  7,84
- propane                  : 13,64
- butanes                  :  0,80
- pentanes                 :  0,26
- isoheptanes              :  0,14
- n-heptane                :  0,04
- diméthylcyclopentanes    :  0,02
- octanes                  :  0,02
- éthylène                 :  0,84
- propène                  :  1.19
- benzène                  :  9,37
- toluène                  : 26,29
- éthylbenzène             :  0,46
- xylènes                  : 15,06
- aromatiques C₉           :  2,83
- aromatiques C₁₀⁺         : 10,52
                            ──────
                            100
```

soit un taux de conversion de la coupe $C_7$ de 99,8 %.
Les sélectivités par rapport à la coupe $C_7$ transformée sont les suivantes :

```
- hydrogène                           :  5,6 %
- craquage (C₁+C₂+C₃+C₄+C₅+C₆)        : 27,7 %
- oléfines (C₂⁼ + C₃⁼)                :  2 %
- aromatiques                         : 64,7 %
- B.T.X                               : 50,8 %.
```

EXEMPLE 7

Le catalyseur $A_1$ de l'exemple 2 est utilisé pour la réaction d'aromatisation d'une coupe oléfinique $C_5$-$C_7$ issue d'une unité de craquage catalytique (type FCC) dont la composition pondérale était la suivante :

```
- pentanes                  :  2,2 %
- hexanes                   :  6,6 %
- heptanes                  :  9,2 %
- méthylcyclopentane        :  0,2 %
- diméthylcyclopentanes     :  0,3 %
- pentènes                  :  8,4 %
- hexènes                   : 27   %
- heptènes                  : 39,4 %
- benzène                   :  1,5 %
- toluène                   :  5,2 %
                              100 %
```

Les conditions opératoires étaient les suivantes :
- température : 480°C
- pression : atmosphérique
- débit horaire de charge liquide égal à 2 fois le poids du catalyseur.
A la sortie du réacteur, le produit avait la composition pondérale suivante (% poids) :

|                          |     |        |
|--------------------------|-----|--------|
| - hydrogène              | :   | 4,01   |
| - méthane                | :   | 4,88   |
| - éthane                 | :   | 6,76   |
| - propane                | :   | 11,88  |
| - butanes                | :   | 0,72   |
| - pentanes               | :   | 0,33   |
| - hexanes                | :   | 0,14   |
| - heptanes               | :   | 0,10   |
| - octanes                | :   | 0,01   |
| - éthylène               | :   | 0,84   |
| - propène                | :   | 1,15   |
| - pentènes               | :   | 0,13   |
| - hexènes                | :   | 0,14   |
| - heptènes               | :   | 0,12   |
| - benzène                | :   | 11,13  |
| - toluène                | :   | 30,77  |
| - éthylbenzène           | :   | 0,42   |
| - xylènes                | :   | 14,57  |
| - aromatiques $C_9$      | :   | 2,66   |
| - aromatiques $C_{10}^+$ | :   | 9,24   |
|                          |     | 100    |

soit un taux de conversion de la coupe oléfinique ($C_5$-$C_7$) de 99 %.

Les sélectivités par rapport à la coupe oléfinique $C_5$-$C_7$ transformée sont les suivantes :

|                                  |              |
|----------------------------------|--------------|
| - hydrogène                      | : 4,35 %     |
| - craquage ($C_1$ à $C_4$)       | : 26,25 %    |
| - oléfines ($C_2^=$ + $C_3^=$)   | : 2,15 %     |
| - aromatiques                    | : 67,25 %    |
| - B.T.X                          | : 53,90 %    |

**Revendications**

1. Utilisation dans l'aromatisation d'une coupe légère contenant 5 à 7 atomes de carbone par molécule d'un catalyseur renfermant en poids :
   a) 0,01 à 10 % de gallium
   b) 0,1 à 99,49 % d'une matrice choisie dans le groupe constitué par l'alumine, la silice, la magnésie, une argile et toute combinaison d'au moins deux des composés précités,
   c) 0,50 à 99,99 % d'une zéolithe synthétisée en milieu fluorure, de rapport molaire $SiO_2/Al_2O_3$ compris entre 12 et 1000, ladite zéolithe ayant en outre une teneur en fluor comprise entre 0,01 et 1,5 % en poids, le fluor étant incorporé lors de la synthèse de la dite zéolithe, laquelle possède un diagramme de diffraction X conforme au tableau 1.

**2.** Utilisation selon la revendication 1 d'un catalyseur renfermant 0,3 à 7 % de gallium en poids.

**3.** Utilisation selon l'une des revendications 1 et 2 d'un catalyseur dans lequel la dite zéolithe présente dans son spectre IR deux bandes situées vers 3730-3750 et 3580-3640 cm$^{-1}$ correspondant aux groupes silanols terminaux et aux groupes Al-OH structuraux respectivement.

**4.** Utilisation selon l'une des revendications 1 à 3 d'un catalyseur dans lequel la dite matrice est une alumine.

**5.** Utilisation selon l'une des revendications 1 à 4 d'un catalyseur renfermant en poids :
a) 0,01 à 10 % en poids de gallium, de préférence 0,3 à 7 %
b) 10 à 40 % d'une matrice à base d'alumine
c) 60 à 90 % d'une zéolithe synthétisée en milieu fluorure de formule chimique approchée généralement la suivante :

$$M_{2/n}O, Al_2O_3, xSiO_2,$$

où
M représente un proton et/ou un cation métallique
n est la valence du cation
x est un nombre compris entre 12 et 1000 (rapport molaire SiO$_2$/Al$_2$O$_3$), la zéolithe ayant une teneur en fluor comprise entre 0,1 et 1 % en poids, le fluor étant incorporé lors de la synthèse, ladite zéolithe étant aussi caractérisée par un diagramme de diffraction X présente dans le tableau I du brevet principal.

**6.** Utilisation selon l'une des revendications 1 à 5 d'un catalyseur sous forme d'extrudés, l'aromatisation étant effectuée dans au moins deux réacteurs à lits fixes, au moins un réacteur étant hors circuit pour y procéder à la régénération du catalyseur.

**Patentansprüche**

**1.** Verwendung eines Katalysators mit der nachstehend angegebenen Gewichtszusammensetzung bei der Aromatisierung einer leichten Fraktion, die 5 bis 7 Kohlenstofftome pro Molekül enthält:
a) 0,01 bis 10 % Gallium
b) 0,1 bis 99,49 % einer Matrix, ausgewählt aus der Gruppe, die besteht aus Aluminiumoxid, Siliciumdioxid, Magnesiumoxid, einem Ton und jeder Kombination von mindestens zwei der genannten Verbindungen,
c) 0,50 bis 99,99 % eines in einem Fluoridmedium (fluorhaltigen Medium) synthetisierten Zeoliths mit einem Molverhältnis SiO$_2$/Al$_2$O$_3$ zwischen 12 und 100, wobei der Zeolith außerdem einen Fluorgehalt zwischen 0,01 und 1,5 Gew.-% aufweist, wobei das Fluor bei der Synthese in den genannten Zeolith eingeführt worden ist, der ein Röntgenbeugungsdiagramm aufweist, das der Tabelle 1 entspricht.

**2.** Verwendung eines Katalysators, der 0,3 bis 7 Gew.-% Gallium enthält, nach Anspruch 1.

**3.** Verwendung eines Katalysators, in dem der Zeolith in seinem IR-Spektrum zwei Banden aufweist, die bei etwa 3730-3750 und 3580-3640 cm$^{-1}$ liegen, die endständigen Silanol-Gruppen bzw. strukturellen Al-OH-Gruppen entsprechen, nach einem der Ansprüche 1 und 2.

**4.** Verwendung eines Katalysators, in dem die genannte Matrix ein Aluminiumoxid ist, nach einem der Ansprüche 1 bis 3.

**5.** Verwendung eines Katalysators mit der nachstehend angegebenen Gewichtszusammensetzung nach einem der Ansprüche 1 bis 4:
a) 0,01 bis 10 Gew.-%, vorzugsweise 0,3 bis 7 Gew.-% Gallium .
b) 10 bis 40 Gew.-% einer Matrix auf Aluminiumoxid-Basis
c) 60 bis 90 Gew.-% eines in einem Fluoirdedium synthetisierten Zeoliths, der die folgende allgemeine chemische Nährungsformel hat:

$$M_{2/n}O, Al_2O_3, xSiO_2$$

worin
M ein Proton und/oder ein Metallkation darstellt,
n die Valenz des Kations bedeutet,

x eine Zahl zwischen 12 und 1000 ist (Molverhältnis $SiO_2/Al_2O_3$), wobei der Zeolith einen Fluorgehalt zwischen 0,1 und 1 Gew.-% aufweist, wobei das Fluor bei der Synthese eingeführt worden ist, und wobei der Zeolith außerdem durch ein Röntgenbeugungsdiagramm charakterisiert ist, wie es in der Tabelle 1 des Hauptpatents angegeben ist.

6. Verwendung eines Katalysators in Form von Extrudaten nach einem der Ansprüche 1 bis 5, wobei die Aromatisierung in mindestens zwei Fixbett-Reaktoren durchgeführt wird, von denen mindestens ein Reaktor ausgeschaltet ist, um darin die Regeneration des Katalysators durchzuführen.

**Claims**

1. Use of a catalyst containing the following constituents (by weight) in aromatising a light cut containing 5 to 7 carbon atoms per molecule;
   a) 0.01 to 10% of gallium
   b) 0.1 to 99.49% of a matrix selected from the group made up of alumina, silice, magnesia, a clay and any combination of at least two of said compounds,
   c) 0.50 to 99.99 % of a zeolite synthesised in a fluoride medium with a $siO_2/Al_2O_3$ molar ratio of from 12 to 1000, the zeolite further having a fluorine content of from 0.01 to 1.5% by weight, the fluorine being incorporated when the zeolite is synthesised, and the zeolite having an X-ray diffraction pattern as shown in Table 1.

2. Use according to Claim 1 of a catalyst containing 0.3 to 7% by weight of gallium.

3. Use according to Claim 1 or 2 of a catalyst wherein said zeolite has two bands in its IR spectrum located at about 3730-3750 and 3580-3640 $cm^{-1}$, corresponding respectively to the silanol end groups and the structural Al-OH groups.

4. Use according to any of Claims 1 to 3 of a catalyst in which said matrix is an alumina.

5. Use according to any of Claims 1 to 4 of a catalyst containing by weight:
   a) 0.01 to 10% and preferably 0.3 to 7% by weight of gallium
   b) 10 to 40% of a matrix based on alumina.
   c) 60 to 90% of a zeolite synthesised in a fluoride medium, generally of the following approximate chemical formula:

$$M_{2/n}O, Al_2O_3, x\ SiO_2,$$

   where
   M reresents a metallic proton and/or cation,
   $\underline{n}$ is the valency of the cation,
   $\underline{x}$ is a number from 12 to 1000 (molar ratio of $SiO_2/Al_2O_3$), the zeolite having a fluorine content of from 0.01 to 1% by weight, the fluorine being incorporated at the synthesising stage, the zeolite also being characterised by an X-ray diffraction pattern shown in Table 1 of the main patent.

6. Use according to any of Claims 1 to 5 of a catalyst in the form of extrusions, wherein aromatisation is carried out in at least two fixed bed reactors, at least one reactor being out of the circuit so that it can regenerate the catalyst.